# EUROPÄISCHE PATENTSCHRIFT

(11) **EP 0 313 882 B1**
(45) Veröffentlichungstag und Bekanntmachung des Hinweises auf die Patenterteilung: **03.02.1993**
(21) Anmeldenummer: 88116421.4
(22) Anmeldetag: 05.10.1988
(51) Int. Cl.: G07C 5/08, G06K 13/08

(54) **Datenkartenanordnung**
Data card assembly
Ensemble de cartes de données

(30) Priorität: 27.10.1987 DE 3736258
(43) Veröffentlichungstag der Anmeldung: 03.05.1989
(73) Patentinhaber: Mannesmann Kienzle GmbH (HR B1220), 78052 Villingen-Schwenningen (DE)
(72) Erfinder: Hautvast, Heinz-Josef, Dipl.-Ing. (FH), D-7734 Brigachtal (DE); Koch, Siegfried, Dipl.-Ing. (FH), D-7730 Villingen-Schwenningen (DE); Säger, Benjamin, Dipl.-Ing. (FH), D-7730 Villingen-Schwenningen (DE)

(56) Entgegenhaltungen:
- DE-A- 3 222 445
- DE-B- 1 279 352
- DE-C- 3 505 068

## Beschreibung

Die Erfindung betrifft eine Datenkartenanordnung in einem Gerät, in welchem mehrere Datenkarten gleichzeitig Anwendung finden.

Datenkarten, deren Funktionen heute von der Identifikationsinformation über Schreib-Lese-Speicher bis zum Kleinrechner reichen, finden bereits vielfältig Anwendung und gewinnen als mobiler Datenträger, insbesondere in Form der sog. Chipkarte, die hohes Speichervermögen und eine zufriedenstellende Datensicherheit bietet, zunehmend an Bedeutung. So ist es üblich, mittels Kreditkarten Einkäufe aller Art zu tätigen, beispielsweise auch zu tanken, Parkraum oder Fahrzeuge zu mieten, Datenkarten lediglich als Ausweis für bestimmte Identifikationszwecke, z. B. bei der Arbeitszeiterfassung oder beim Bankverkehr, zu benutzen oder ihnen die Funktion von Schlüsseln zuzuordnen.

Mit der zunehmenden Bedeutung der Datenkarten als Informationsträger sowie mit zunehmenden Funktionen und Wertinhalten sind auch die Anforderungen an die Mittel, die einer Datenkarte in der Datentransferposition innerhalb eines Gerätes als Aufnahme dienen, gestiegen. So ist insbesondere bei Chipkarten mit einer Vielzahl eng beieinanderliegender Kontakte eine genaue Lagefixierung erforderlich. Hinzu kommen, von den zwingend erforderlichen Abtastmitteln abgesehen, für viele Anwendungsfälle Ver- und Entriegelungseinrichtungen sowie Zugriffssicherungsmittel, gegebenenfalls auch ein in dem Gehäuse der betreffenden Datenkartenaufnahme geführter Transportschlitten. D. h. die Datenkartenaufnahme, die für den Benutzer in der Regel nur als ein Schlitz, in den die Datenkarte einzuführen ist, in Erscheinung tritt, wird zu einem relativ aufwendigen Aufnahmeaggregat.

In Anwendungsfällen, in denen zeitgleich mehrere Datenkarten für eine bestimmte Funktion erforderlich sind, mehrere Personen über Datenkarten zeitgleich mit ein und demselben Gerät korrespondieren oder Maschinendaten und Personendaten dezentral getrennt erfaßt werden sollen, wird der Gesamtaufwand, abgesehen von dem hierfür erforderlichen Raumbedarf, durch Wiederholen der Datenkartenaufnahmen unangemessen hoch. Beispiele solcher Anwendungsfälle sind die gemeinsame Schlüsselfunktion zweier Datenkarten, die gemeinsame Verwendung einer Datenkarte mit einer Identifikationskarte, wenn aus Sicherheitsgründen das Eingeben einer Identifikationsnummer über eine Tastatur zu riskant ist, die dezentrale Erfassung von Fertigungsdaten mit einer beispielsweise einem bestimmten Auftrag zugeordneten ersten Datenkarte zusammen mit einer personenbezogenen zweiten Datenkarte, die der Erfassung der Arbeitszeit dient, und, wie das in der DE-PS 35 05 068 beschriebene Fahrtschreibersystem zeigt, die zeitgleiche Benutzung von Fahrer und Beifahrer eines Kraftfahrzeuges zugeordneten elektronischen Datenkarten, in denen wenigstens die personenbezogenen Daten des Fahrbetriebes abgespeichert werden.

Im Vergleich mit in Fahrtschreibern üblichen Diagrammscheiben, um bei dem letztgenannten Anwendungsbeispiel zu bleiben, erfüllen Datenkarten als personen- oder fahrerbezogene Datenträger in besonderer Weise die Anforderungen im Kraftfahrzeugtransportwesen bezüglich Fahrerplatz- und Fahrzeugwechsel insbesondere deshalb, weil bei den in Chipkarten implantierten Speichern problemlos mehrere Arbeitstage erfaßbar sind und somit die gesetzliche Forderung, daß die Fahrten der beiden vorangegangenen Tage vorweisbar sein müssen, auf besonders einfache Weise erfüllbar ist.

Die Entwicklung immer kompakterer Geräte mit einer strengen Optimierung von Preis und Leistung, die beschränkten Raumverhältnisse in Armaturenbrettern von Kraftfahrzeugen und die für den Fahrzeuggerätesektor geltenden Bedingungen der Großserienfertigung erschweren das an sich erwünschte Vordringen der Datenkarten in bisher nicht übliche Anwendungsgebiete, insbesondere jedoch die gleichzeitige Verwendung mehrerer Datenkarten in ein und demselben Gerät.

Es war somit die Aufgabe gestellt, für die gleichzeitige Verwendung mehrerer Datenkarten in ein und demselben Gerät den Raumbedarf und den technischen Aufwand für die erforderlichen Datenkartenaufnahmen zu verringern.

Die Lösung dieser Aufgabe ist gekennzeichnet durch die im Kennzeichnenden Teil von Anspruch 1 angegebenen Merkmale.

Eine Ausführungsvariante sieht vor, daß den Datenkarten eine dem Gerät entnehmbare Tasche zugeordnet ist.

Die Tatsache, daß für zwei Datenkarten, abgesehen von den Datenübertragungsmitteln, die Verriegelungseinrichtungen bzw. Festhaltemittel, die Zugriffssicherungsmittel, Auswerfeinrichtungen, evtl. Transportmittel für das Einführen und Ausgeben und die Gehäuse der Datenkartenaufnahmen nur einmal erforderlich sind, ist insbesondere auf dem Sektor der Kraftfahrzeuginstrumentierung von besonderem Vorteil. Einerseits ist der in den unterschiedlichen Armaturenbrettern verfügbare Geräteeinbauraum äußerst gering, andererseits verbieten funktionelle, designerische und Handhabungsaspekte Anordnungen der betreffenden Datenerfassungsgeräte außerhalb des Armaturenbretts.

Erwähnenswert ist ferner, daß trotz der erfindungsgemäßen Kompaktierung die Datenbewegungen auf den beiden aufeinanderliegenden Datenkarten gleichzeitig und ohne Einschränkung erfolgen können. Dabei sind außer mechanisch-galvanischen Datenübertragungsmitteln optische, induktive oder kapazitive mit entsprechenden Adaptionsanordnungen und erforderlichenfalls die gegenseitige Beeinflussung sperrende Isolationsschichten denkbar. Außerdem gestattet die Erfindung eine insbesondere für Schließfunktionen sowie für Zugangs- und Zugriffssysteme geeignete, paarweise Verwendung zweier mechanisch oder elektronisch komplementär codierter Datenkarten. Ein weiterer Vorteil ergibt sich, wenn im Falle der Fahrtschreiberanwendung die beiden Arbeitszeitdatenkarten von Fahrer und Beifahrer in einer von der Datenkartenaufnahme trennbaren Tasche bzw. Kassette aufgenommen und beispielsweise durch eine federnde Zunge in der Tasche festgehalten werden. Bei Fahrerwechsel ist mit dieser Anordnung der Datenkarten lediglich die Kassette zu wenden, d. h. die Handhabbarkeit der Datenkarten ist, vergleicht man sie mit der bei Diagrammscheiben erforderlichen Prozedur, für diesen Anwendungsfall in besonderer Weise optimiert.

Zweckmäßig ist ferner die Anwendung der Erfindung im Fahrpreisrechner eines Taxis, wobei aufgrund der relativ flachen Bauform dieses Gerätes dem Datenkartenpaar eine aus der Frontwand herausschwenkbare, taschenförmige Klapplade zugeordnet ist. In diesem Falle dient die eine, möglicherweise nicht ohne weiteres entnehmbare Datenkarte der Erfassung von Fahrzeugbetriebsdaten bzw. von für den Taxibetrieb relevanter Tourendaten, während die andere in der Klapplade "oben" oder "innenliegende" und in einer geeigneten Halterung relativ leicht, z. B. durch Verschieben entnehmbare Datenkarte als personenbezogener Datenträger für die Erfassung der Arbeitszeiten des betreffenden Fahrers vorgesehen ist. Zusätzlich kann dieser Datenkarte die Funktion als Fahrerlaubnis-bzw. als Benutzungsausweis zugeordnet sein. Vorstellbar ist ein solches Konzept auch in Anwendung bei Baumaschinen, Fertigungsmaschinen oder bei Mietfahrzeugen, wobei die Funktionen der personenbezogenen Datenkarte zusätzlich Benutzungsbeschränkungen, beispielsweise einen Befehl zur Geschwindigkeitsbegrenzung, beinhalten kann.

Im folgenden sei die Erfindung anhand der Zeichnungen näher erläutert. Es zeigen
FIGUR 1 ein Ausführungsbeispiel einer für die Aufnahme von zwei Datenkarten ausgebildeten Datenkartenaufnahme im Schnitt,
FIGUR 2 die Frontseite eines Datenerfassungsgerätes, beispielsweise eines Fahrtschreibers, in dem die erfindungsgemäße Datenkartenaufnahme angeordnet ist,
FIGUR 3 eine Ansicht zweier Datenkarten in einer Position, wie sie für das Einfügen in die erfindungsgemäß ausgebildete Datenkartenaufnahme erforderlich ist,
FIGUR 4 die Frontseite eines Datenerfassungsgerätes, bei dem der Schlitz der Datenkartenaufnahme durch eine frontseitig angeordnete Klappe verriegelbar ist,
FIGUR 5 eine teilweise Seitenansicht des Datenerfassungsgerätes gemäß FIGUR 4 im Schnitt,
FIGUR 6 die Frontseite eines Datenerfassungs- bzw. Informationsgerätes, bei dem die Datenkartenaufnahme als frontseitig betätigbare Klapplade ausgebildet ist,
FIGUR 7 eine teilweise Seitenansicht des Datenerfassungsgeräts gemäß FIGUR 6 im Schnitt,
FIGUR 8 eine Ansicht einer Instrumentenkonsole mit einer Datenkartenaufnahme, in welche die Datenkarten eingelegt und mittels eines Deckels gehalten werden,
FIGUR 9 eine zwei Datenkarten zugeordnete Tasche zur Verwendung in einer Datenkartenaufnahme,
FIGUR 10 eine weitgehend schematische Darstellung einer Datenkartenaufnahme mit den Datenkarten zugeordneten Transportmitteln,
FIGUR 11 ein Ausführungsbeispiel einer Datenkartenaufnahme mit versetzt angeordneten Datenkarten im Schnitt,
FIGUR 12 eine perspektivische Darstellung zweier mechanisch codierter Datenkarten.

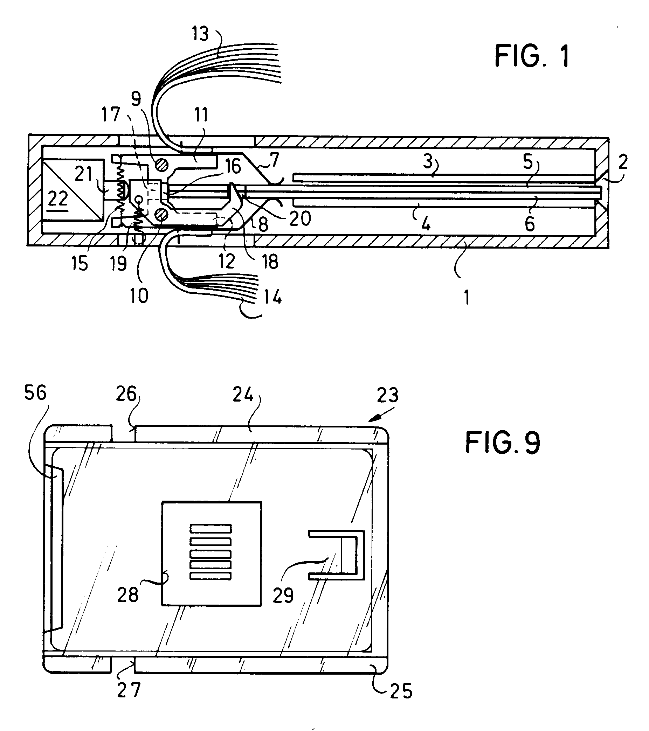

Die Datenkartenaufnahme gemäß FIGUR 1 wird gebildet von einem vorzugsweise zweiteiligen für den Einbau geeigneten Gehäuse 1, an welchem ein Schlitz 2 und Führungsschienen 3, 4 derart ausgebildet sind, daß gleichzeitig zwei Datenkarten 5 und 6 Rücken an Rücken bzw. Frontseite an Frontseite jedenfalls so eingeschoben werden können, daß die Schnittstellenkontakte der beiden Datenkarten 5 und 6 nach außen weisen und von außen zugänglich sowie die visuell lesbaren Informationsseiten gegeneinander gekehrt sind. Den Schnittstellenkontakten sind als Abtasteinrichtung Kontaktfedersätze 7, 8 zugeordnet, die auf jeweils um eine Achse 9 bzw. 10 schwenkbar gelagerte Träger 11 und 12 befestigt und mit jeweils einem Flachkabelstrang 13 und 14 kontaktiert sind. Unter der Wirkung einer an den Trägern 11 und 12 angreifenden Zugfeder 15 liegen an den Trägern 11 und 12 angeformte Schenkel 16 und 17 in der in FIGUR 1 dargestellten Postion an jeweils ein und derselben Stirnfläche der beiden Datenkarten 5 und 6 an. Gleichzeitig greift ein ebenfalls auf der Achse 10 gelagerter Riegel 18, der unter der Wirkung einer Zugfeder 19 steht, in geeignete, mit 20 bezeichnete Öffnungen in den Datenkarten 5 und 6 ein. Wird der Riegel 18 vom Anker 21 eines Elektromagneten 22 betätigt und aus den Öffnungen 20 ausgehoben, so bewirkt die Zugfeder 15 ein Verschwenken der beiden Träger 11 und 12 und über deren Schenkel 16 und 17 ein Ausstoßen der beiden Datenkarten 5 und 6.

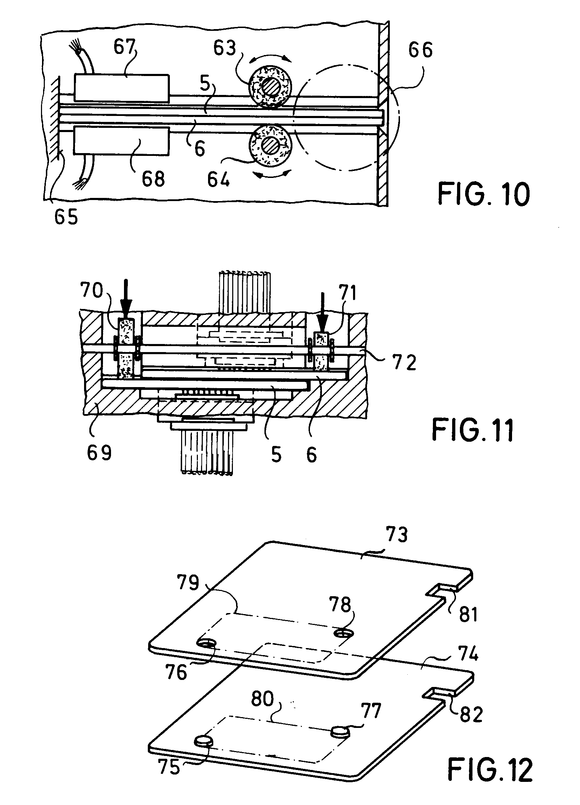

Die beiden Datenkarten 5 und 6 können auch mittels einer Kassette oder Tasche in die Datenkartenaufnahme gemäß FIGUR 1 eingegeben werden. Eine solche Kassette 23 zeigt FIGUR 9. An gegenüberliegenden Stirnseiten des Kassettengehäuses können Führungsstege 24 und 25 ausgebildet sein, in denen Öffnungen 26 und 27 für den oder die Riegel 18 angebracht sind. Ferner ist auf jeder Seite der Kassette 23 ein Fenster 28 für den Durchtritt der Kontaktfedern 7 bzw. 8 freigespart. Eine in der Kassettenwand ausgebildete Zunge 29 dient dem federnden Festhalten der Datenkarten 5 und 6 innerhalb der Kassette 23.

Anstelle der in FIGUR 1 dargestellten Ver- und Entriegelungseinrichtung kann, was an sich bekannt ist, ein bistabiles Rastgetriebe verwendet werden, welches mittels der Datenkarten 5 und 6 oder der Kassette 23 betätigbar ist.

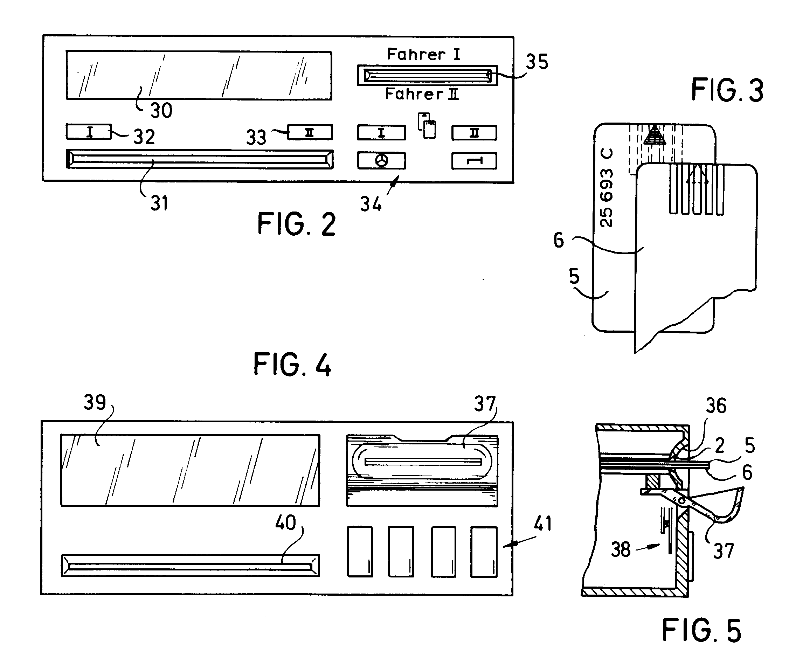

Die FIGUR 2 zeigt die Frontseite eines für den Einbau im Armaturenbrett eines Kraftfahrzeuges geeigneten Datenerfassungsgerätes, beispielsweise eines Fahrtschreibers, mit einer als Zeilendisplay ausgebildeten Anzeigeeinrichtung 30, einem Einzugsschacht 31, über den ein blattförmiger Druckträger zur Entnahme eines Fahrtprotokolls einführbar ist, Fahrer und Beifahrer zugeordnete Tasten 32 und 33 für die Eingabe von - die Lenkzeiten werden automatisch erkannt - "Bereitschaftszeiten" und "Ruhezeiten", ein Tastenfeld 34 zum Anwählen von Informationen über den Arbeits- und Ruhezeitstand sowie eine Datenkartenaufnahme 35, in die die Datenkarten 5 und 6 von Fahrer und Beifahrer bzw. Fahrer I und Fahrer II, wie in FIGUR 3 gezeigt, eingeführt werden.

Eine Ausführungsvariante eines derartigen Fahrtschreibers zeigen die FIGUREN 4 und 5. Dem mit einer Griffmulde 36 ausgebildeten Schlitz 2 der Datenkartenaufnahme ist bei dieser Lösung eine Klappe 37 zugeordnet, die mit einem Schalter 38 zusammenwirkt und elektromagnetisch verriegelbar ist. Die Klappe 37 kann in Abstimmung mit friktionellen Mitteln innerhalb der Datenkartenaufnahme derart ausgebildet sein, daß sie ein Positionieren der Datenkarten 5 und 6 bewirkt. Eine Auswerffunktion ist bei dieser Lösung nicht unbedingt erforderlich, da die Datenkarten nach dem Öffnen der Klappe 37 ohne weiteres von Hand entnommen werden können. Ansonsten weist das Gerät frontseitig ebenfalls eine Anzeigeeinrichtung 39, einen Einzugsschacht 40 und ein Tastenfeld 41 auf.

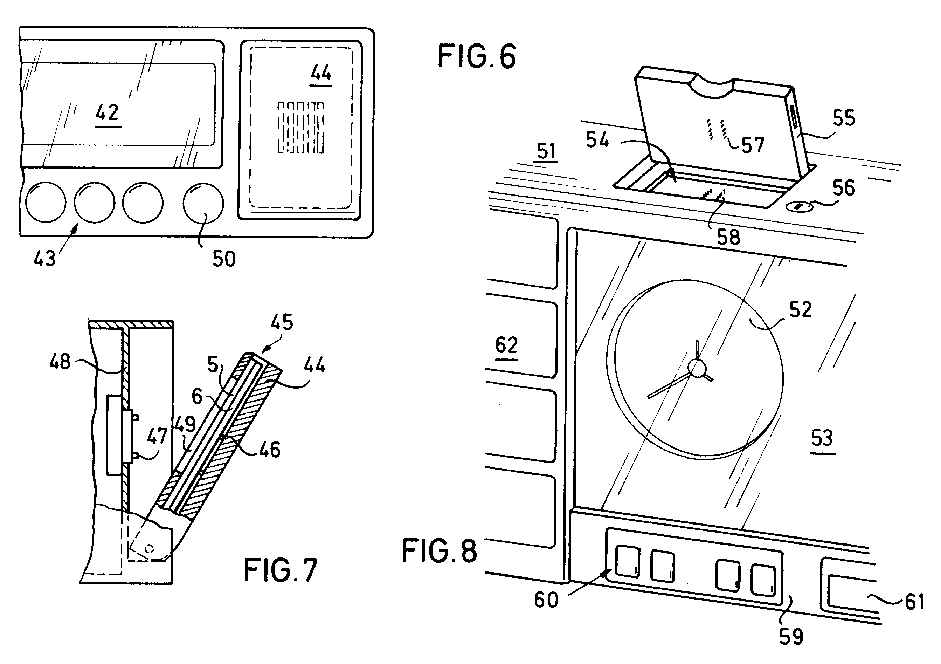

Die FIGUREN 6 und 7 zeigen ein Anwendungsbeispiel für besonders flache Geräte, wobei die beiden Datenkarten 5 und 6 in Ebenen parallel zur Frontfläche des betreffenden Datenerfassungs- bzw. Informationsgerätes, beispielsweise eines Taxifahrpreisrechners, angeordnet sind. Hierzu ist eine senkrecht zur Frontfläche des Gerätes, das mit einem Display 42 und einer Funktionstastatur 43 versehen ist, schwenkbare Klapplade 44 vorgesehen, in der ein den Datenkarten 5 und 6 zugeordneter Aufnahmeschacht 45 ausgebildet ist. Der Kontaktierung der Datenkarten 5 und 6 dienen federnde Kontaktstifte, von denen die einen - 46 - der Datenkarte 6 zugeordnete, in der Klapplade 44 angeordnet sind, während die der Datenkarte 5 zugeordnete - 47 - sich im Gehäuse 48 des Gerätes befinden und durch eine Freisparung 49, die zusätzlich dazu dient, die Datenkarten 5 und 6 aus dem Aufnahmeschacht 45 herauszuschieben, auf die Datenkarte 5 durchgreifen. Eine Taste 50 ist für das Entriegeln der Klapplade 44 vorgesehen.

Die FIGUR 8 zeigt eine Instrumentenkonsole 51 eines Kraftfahrzeuges, bei der die üblichen Anzeigeinstrumente, von denen eines, 52, dargestellt ist, hinter einer gemeinsamen Glasscheibe 53 sichtbar sind. An der Oberseite der Instrumentenkonsole 51 ist eine Aussparung 54 vorgesehen, welcher ein schwenkbar gelagerter Deckel 55, der mittels eines geeigneten Schlosses 56 verschließbar sein kann, zugeordnet ist. Die Aussparung 54 ist als Datenkartenaufnahme derart ausgebildet, daß zwei Datenkarten einlegbar und gleichzeitig kontaktierbar sind, d. h. es sind sowohl im Deckel 55 als auch im Boden der Aussparung 54 Kontaktsätze 57 und 58 vorgesehen. In einem geeigneten Ausschnitt in einer Blende 59 sind Tasten 60 eingebaut, mit denen in bekannter Weise die jeweilige Arbeitsart von den Fahrern eingebbar ist. Mit 61 ist eine Datenkassette bezeichnet, welche bei dem dargestellten modulisierten Fahrtschreibersystem der zeitrichtigen Fahrtdatenerfassung dient und die Möglichkeit bietet, daß auch die fahrzeugbezogenen Daten ohne weiteres einem bestimmten Fahrer zugeordnet werden können. Mit 62 sind Leerfelder, Schalter oder Signalelemente der Instrumentenkonsole bezeichnet.

Mit der FIGUR 10 ist schematisch dargestellt, daß den Datenkarten 5 und 6 Transportrollen oder Transportwalzen 63 und 64 zugeordnet sein können, die im einfachsten Falle eine Klemmwirkung ausüben, aber auch angetrieben sein können. Im letzteren Falle lassen sich die Datenkarten 5 und 6 sowohl unzugänglich in die Datenkartenaufnahme einziehen, als auch eine stets definierte Datenübertragungsposition an beispielsweise einem Anschlg 65 erzielen. Das Ausgeben der Datenkarten 5 und 6 kann beispielsweise auch von Hand mittels eines oder jeweils eines mit den Transportrollen 63 und 64 getrieblich verbundenen Handrades 66 erfolgen. Ferner bietet diese Lösung die Möglichkeit, die Datenkarten 5 und 6 einzeln auszugeben. Die Datenübertragung und Abtastung erfolgt bei diesem Ausführungsbeispiel kontaktlos, d. h. die dargestellten Schreib-Leseeinheiten 67, 68 arbeiten, je nach Gestaltung der Datenkarte, induktiv, kapazitiv oder optisch.

Die FIGUR 11 zeigt ein Ausführungsbeispiel einer Datenkartenaufnahme, in deren Gehäuse 69 eine den Datenkarten 5, 6 zugeordnete Führung vorgesehen ist, die eine versetzte Anordnung der Datenkarten 5 und 6 gestattet. Bei dieser Anordnung können auf die Datenkarten einwirkende Transportrollen 70 und 71 auf einer gemeinsamen Achse 72 angeordnet sein, was die Bauhöhe verringert und den konstruktiven Aufwand vereinfacht.

Die FIGUR 12 zeigt zwei Datenkarten 73 und 74, die mechanisch codiert sind, und zwar mittels Stift-Loch-Verbindungen 75, 76 und 77, 78, die beispielsweise innerhalb eines auf den Datenkarten ausgewählten Feldes 79 bzw. 80 beliebig angebracht sind. Bei einer derartigen Spezialkarte bzw. einem z. B. eine Schlüsselfunktion ausübenden Kartenpaar kann ein etwaiger Verriegelungsschlitz 81 bzw. 82 auch asymmetrisch angebracht sein.

Der Vollständigkeit halber sei noch erwähnt, daß, um ein unmittelbares Aufeinanderliegen der Datenkarten zu vermeiden, ohne auf den erfindungsgemäßen Vorteil verzichten zu müssen, in der Datenkartenaufnahme geeignete Führungsschienen oder eine Zwischenwand ausgebildet sein kann. Erwähnt sei ferner, daß die Datenkartenaufnahme an irgendeiner Stelle im Armaturenbrett vorgesehen sein kann bzw. dort vorgesehen werden sollte, wo die bestmögliche Handhabung der Datenkarten gegeben ist.

## Patentansprüche

1. Gerät mit einer Datenkartenaufnahme, welche für die Aufnahme und gleichzeitige Anwendung von zwei Datenkarten (5, 6) ausgebildet ist,
dadurch gekennzeichnet,
daß in einer Datenübertragungsposition die beiden Datenkarten (5, 6) aufeinanderliegend in der Datenkartenaufnahme eingelegbar sind,
und daß der Datenkartenaufnahme zwei Abtasteinrichtungen (7, 11 und 8, 12) zugeordnet sind, welche an den, den aneinanderliegenden Datenkartenflächen abgewandten Datenkartenflächen angeordnet sind.

2. Datenkartenanordnung nach Anspruch 1,
dadurch gekennzeichnet,
daß zwei miteinander zu verwendende Datenkarten (73, 74) mechanisch komplementär codiert sind.

3. Datenkartenanordnung nach Anspruch 1,
dadurch gekennzeichnet,
daß den Datenkarten (5, 6) eine dem Gerät entnehmbare Tasche (23) zugeordnet ist.

4. Datenkartenanordnung nach Anspruch 1,
dadurch gekennzeichnet,
daß jede Datenkarte (5, 6) mit einer Antriebseinrichtung (63, 64) in Wirkverbindung steht, derart daß die Datenkarten (5, 6) unabhängig voneinander ein- und ausgebbar sind.

5. Datenkartenanordnung nach Anspruch 4,
dadurch gekennzeichnet,
daß die Datenkarten (5, 6) in der Datenkartenaufnahme in Kartenebene versetzt zueinander angeordnet sind und die Antriebseinrichtungen (70, 71) dem Datenkartenschacht einseitig zugeordnet sind.

6. Datenkartenanordnung nach Anspruch 1,
dadurch gekennzeichnet,
daß die Datenkartenaufnahme mit Verriegelungsmitteln (18, 19) ausgestattet ist, die mit in den Datenkarten (5, 6) ausgebildeten Verriegelungsöffnungen (20) zusammenwirken.

7. Datenkartenanordnung nach Anspruch 1,
dadurch gekennzeichnet,
daß die Datenkartenaufnahme von einem durch einen Schlitz (2) zugänglichen Schacht gebildet ist und daß dem Schlitz (2) eine verriegelbare Klappe (37) zugeordnet ist.

8. Datenkartenanordnung nach Anspruch 1,
dadurch gekennzeichnet,
daß die Datenkartenaufnahme an einer um eine Achse schwenkbaren Klapplade (44) ausgebildet ist.

9. Datenkartenanordnung nach Anspruch 1,
dadurch gekennzeichnet,
daß in dem Gerätegehäuse eine wannenartige Vertiefung (54) ausgebildet ist,
daß der Vertiefung (54) ein Deckel (55) zugeordnet ist und daß in dem Deckel (55) der einen Datenkarte (5 oder 6) zugeordnete Abtasteinrichtung (57) angeordnet ist.

## Claims

1. Device having a data card receiver which is constructed for receiving and for the simultaneous use of two data cards (5, 6), characterized in that in a data transfer position the two data cards (5, 6) may be inserted one on top of the other in the data card receiver, and in that there are associated with the data card receiver two Scanning devices (7, 11 and 8, 12) which are arranged on the data card faces remote from the data card faces bearing against one another.

2. Data card arrangement according to Claim 1, characterized in that two data cards (73, 74) to be used together are mechanically complementarily coded.

3. Data card arrangement according to Claim 1, characterized in that there is associated with the data cards (5, 6) a pocket (23), which may be removed from the device.

4. Data card arrangement according to Claim 1, characterized in that each data card (5, 6) is actively connected to a drive device (63, 64) such that the data cards (5, 6) may be input and output independently of one another.

5. Data card arrangement according to Claim 4, characterized in that the data cards (5, 6) in the data card receiver are arranged offset with respect to one another in the plane of the cards and the drive devices (70, 71) are associated on one side with the data card shaft.

6. Data card arrangement according to Claim 1, characterized in that the data card receiver is equipped with locking means (18, 19) which cooperate with locking openings (20) made in the data cards (5, 6).

7. Data card arrangement according to Claim 1, characterized in that the data card receiver is formed by a shaft which is accessible through a slot (2), and in that a lockable flap-type container (37) is associated with the slot (2).

8. Data card arrangement according to Claim 1, characterized in that the data card receiver is constructed on a flap (44) which is pivotal about a spindle.

9. Data card arrangement according to Claim 1, characterized in that a trough-like depression (54) is made in the device housing, in that a cover (55) is associated with the depression (54), and in that a scanning device (57) associated with one data card (5 or 6) is arranged in the cover (55).

## Revendications

1. Appareil avec un dispositif de réception de cartes de données qui est conçu pour la réception et utilisation simultanée de deux cartes de données,
caractérisé par le fait
que, dans une position de transfert de données, les deux cartes de données (5, 6) peuvent être introduites superposées dans le dispositif de réception de cartes de données et
qu'au dispositif de réception de cartes de données sont associés deux dispositifs d'exploration (7, 11 et 8, 12) qui sont disposés sur les faces de cartes de données opposées aux faces de cartes de données contigueées.

2. Dispositif de cartes de données selon la revendication 1,
caractérisé par le fait
que deux cartes de données (73, 74) destinées à être utilisées ensemble sont dotées d'un codage mécanique complémentaire.

3. Dispositif de cartes de données selon la revendication 1,
caractérisé par le fait
qu'aux cartes de données (5, 6) est associée une pochette (23) pouvant être retirée de l'appareil.

4. Dispositif de cartes de données selon la revendication 1,
caractérisé par le fait
que chaque carte de données (5, 6) coopère fonctionnellement avec un dispositif d'entraînement (63, 64), de telle sorte que lesdites cartes de données (5, 6) peuvent être entrées et sorties indépendamment l'une de l'autre.

5. Dispositif de cartes de données selon la revendication 4,
caractérisé par le fait
que les cartes de données (5, 6) dans le dispositif de réception de cartes de données sont disposées décalées l'une par rapport à l'autre dans le plan de carte et que les dispositifs d'entraînement (70, 71) sont unilatéralement associés à la trémie de cartes de données.

6. Dispositif de cartes de données selon la revendication 1,
caractérisé par le fait
que le dispositif de réception de cartes de données est équipé de moyens de verrouillage (18, 19) qui coopèrent avec des ouvertures de verrouillage (20) pratiquées dans les cartes de données (5,6).

7. Dispositif de cartes de données selon la revendication 1,
caractérisé par le fait
que le dispositif de réception de cartes de données est formé par une trémie accessible par une fente (2) et qu'à ladite fente (2) est associé un volet verrouillable (37).

8. Dispositif de cartes de données selon la revendication 1,
caractérisé par le fait
que le dispositif de réception de cartes de données est formé sur un volet rabattable (44) pouvant pivoter autour d'un axe.

9. Dispositif de cartes de données selon la revendication 1,
caractérisé par le fait
que dans le boîtier d'appareil est formé un évidement en cuvette (54),
qu'audit évidement (54) est associé un couvercle (55) et que dans ledit couvercle (55) est disposé un dispositif d'exploration (57) associé à l'une des cartes de données (5 ou 6).
